# DEMANDE DE BREVET EUROPEEN

(11) **EP 3 091 501 A1**
(43) Date de publication de la demande: **09.11.2016**
(21) Numéro de dépôt: 16168116.8
(22) Date de dépôt: 03.05.2016
(51) Int. Cl.: G06Q 50/34, G07F 17/32

(54) **PROCÉDÉ DE PARTICIPATION À UNE LOTERIE MIS EN OEUVRE PAR UN TERMINAL MOBILE**

(30) Priorité: 04.05.2015 FR 1553981
(71) Demandeur: MORPHO, 92130 Issy-Les-Moulineaux (FR)
(72) Inventeur: RATIER, Jean-Baptiste, 92130 Issy-Les-Moulineaux (FR); HERBAUT, Vincent, 92130 Issy-Les-Moulineaux (FR)
(74) Mandataire: Regimbeau

(57) **Abrégé**

Il est proposé un procédé de participation à une loterie comprenant les étapes suivantes mises en oeuvre par un terminal mobile (1) comprenant une interface de saisie (2) et un élément sécurisé (12): acquisition (202) via l'interface de saisie de données de pari, envoi (206) des données de pari acquises vers le système serveur de loterie (34), réception (214) d'un ticket de loterie virtuel généré par le système serveur de loterie en réponse à l'envoi des données de pari, le ticket de loterie virtuel comprenant un identifiant unique du pari effectué, mémorisation (216) du ticket de loterie virtuel dans une mémoire de l'élément sécurisé (12).

## Description

### DOMAINE GENERAL

L'invention concerne un procédé de participation à une loterie, un procédé d'organisation d'une loterie, et des dispositifs pour mettre en oeuvre de tels procédés.

### ETAT DE L'ART

On définit une loterie comme un jeu visant à distribuer des gains à un ou des gagnant(s) sélectionnés au hasard grâce à un tirage effectué parmi des joueurs ayant payé une mise de départ.

On désigne par le terme de « pari » la mise de départ d'un des joueurs. Cette mise de départ peut être par exemple une somme d'argent.

Le gain peut également être une somme d'argent.

Les organismes de loterie actuels impriment un ticket physique « au porteur », c'est-à-dire un reçu faisant office de preuve pour le remboursement d'un gain. Dans la suite du présent document, le terme « ticket de loterie » désignera une preuve de participation à une loterie.

L'impression des tickets est généralement mise en oeuvre par des bornes de participation, lesquelles sont mis à disposition des participants sur des lieux de vente. La vérification des tickets faisant office de preuve est également mise en oeuvre par des bornes de participation.

Or, de tels tickets de loterie imprimés présentent des inconvénients.

Premièrement, un ticket sous forme papier présente des risques de falsification.

Deuxièmement, l'impression de papier présente un coût élevé pour l'organisme de loterie : un coût direct (papier consommé pour chaque ticket) et un coût indirect (adaptation des terminaux de participation pour leur édition et leur lecture).

Troisièmement, un ticket « au porteur » est par définition non nominatif, sans lien avec le participant l'ayant acheté. Aussi, en cas de perte ou de vol du ticket, le participant perd irrémédiablement son gain.

Quatrièmement, l'organisme de loterie ne peut pas annoncer au participant son gain de manière anonyme.

Cinquièmement, un organisme organisateur de loterie n'a pas de visibilité sur les habitudes de jeu des joueurs, car les tickets sont anonymes.

### PRESENTATION DE L'INVENTION

Un but de l'invention est pallier au moins un des inconvénients mentionnés ci-dessus.

Afin d'atteindre ce but l'invention propose un procédé de participation à une loterie comprenant les étapes suivantes mises en oeuvre par un terminal mobile comprenant une interface de saisie et un élément sécurisé:
- acquisition via l'interface de saisie de données de pari,
- envoi des données de pari acquises vers le système serveur de loterie,
- réception d'un ticket de loterie virtuel généré par le système serveur de loterie en réponse à l'envoi des données de pari, le ticket de loterie virtuel comprenant un identifiant unique du pari effectué,
- mémorisation du ticket de loterie virtuel dans une mémoire de l'élément sécurisé.

Le terminal mobile est un terminal personnel d'utilisateur. La mémorisation du ticket de loterie virtuel dans le terminal crée donc un lien entre le ticket et l'utilisateur.

De plus, comme cette mémorisation est effectuée dans un élément sécurisé du terminal mobile, les risques de falsification du ticket virtuel peuvent être évités.

Le procédé peut également être complétée par les étapes suivantes, prises seules ou en une quelconque de leurs combinaisons techniquement possibles :
- envoi à un système serveur de loterie d'un numéro d'abonné propre à une carte d'identification d'abonné à un réseau mobile du terminal mobile,
- réception d'une commande de configuration de l'élément sécurisé ayant pour destinataire le numéro d'abonné,
- allocation, dans l'élément sécurisé, d'un espace mémoire à partir de la commande de configuration reçue,
- l'établissement d'un canal de communication en champ proche avec un terminal de relai, les données de pari étant émises dans le canal établi en vue de leur retransmission par le terminal de relai vers le système serveur de loterie ;
- une comparaison entre un code saisi via l'interface de saisie et un code de référence mémorisé par l'élément sécurisé et propre à l'utilisateur du terminal mobile, les données de pari étant émises ou non vers le système serveur de loterie en fonction du résultat de la comparaison ;
- la réception d'une valeur de gain émise par le système serveur de loterie et associée à l'identifiant unique ;
- l'affichage de la valeur de gain reçue sur un écran du terminal mobile ;
- l'envoi vers le système serveur de loterie d'une requête de gain comprenant l'identifiant unique mémorisé par l'élément sécurisé, la réception de la valeur de gain faisant réponse à l'envoi de requête de gain ;
- un effacement du ticket de loterie virtuel mémorisé dans l'élément sécurisé en réponse à la réception d'un gain de valeur nulle associée à l'identifiant unique, et/ou la réception d'un message indiquant qu'un paiement d'une valeur de gain associée à l'identifiant unique au profit d'un bénéficiaire identifié par les données de pari a été effectué.

L'invention propose selon un deuxième aspect un procédé de participation à une loterie caractérisé en ce qu'il comprend les étapes suivantes mises en oeuvre par un terminal de relai:
- réception de données de pari émises par un terminal mobile,
- transmission des données reçues à un système serveur de loterie,
- réception d'un ticket de loterie virtuel généré par le système serveur de loterie en réponse à la transmission, le ticket de loterie virtuel comprenant un identifiant unique permettant d'identifier le pari effectué,
- impression à partir des données de pari et/ou du ticket de loterie virtuel d'une facturette identifiant le pari effectué.

Le procédé selon le deuxième aspect de l'invention peut en outre comprendre des étapes de :
- réception de l'identifiant unique émis par le terminal mobile,
- émission vers le serveur de loterie d'une requête de gain comprenant l'identifiant unique,
- réception d'une valeur de gain associée à l'identifiant unique en réponse à la requête de gain,
- mise en oeuvre d'au moins une des étapes suivantes :
   ∘ affichage de la valeur de gain sur un écran du terminal de relai,
   ∘ transmission de la valeur de gain au terminal mobile,
   ∘ distribution d'une somme d'argent liquide correspondant à la valeur de gain stockée dans un distributeur du terminal de relai.

Il est également proposé, selon un troisième aspect de l'invention, un procédé d'organisation d'une loterie virtuelle, comprenant les étapes suivantes mises en oeuvre par un système serveur de loterie:
- réception de données de pari émises par un terminal mobile comprenant un élément sécurisé,
- génération d'un ticket de loterie virtuel en réponse à la réception le ticket de loterie comprenant un identifiant unique permettant d'identifier le pari effectué,
- envoi du ticket de loterie virtuel généré au terminal mobile en vue de sa mémorisation par l'élément sécurisé.

Selon un quatrième aspect de l'invention, il est proposé en outre un terminal mobile comprenant :
- une interface de saisie de données de pari,
- une interface de communication pour communiquer avec un système serveur de loterie,
- un élément sécurisé comprenant une mémoire,
- une carte d'identification d'abonné à un réseau mobile, la carte étant associée en propre à un numéro d'abonné,
- au moins une unité de traitement configurée pour commander :
   o l'envoi des données de pari saisies vers le système serveur de loterie,
   ∘ la mémorisation dans la mémoire de l'élément sécurisé d'un ticket de loterie virtuel généré par le serveur en réponse à l'envoi, reçu par l'interface de communication, le ticket de loterie virtuel comprenant un identifiant unique permettant d'identifier le pari effectué.

L'élément sécurisé peut comprendre :
- la carte d'identification d'abonné à un réseau mobile, ou
- un environnement d'exécution de confiance du terminal mobile, ou
- une carte mémoire amovible par rapport au terminal mobile.

Selon un cinquième aspect de l'invention, il est proposé un terminal de relai comprenant :
- une interface de communication adaptée pour :
   ∘ recevoir des données de pari émises par un terminal mobile,
   ∘ transmettre les données de pari à un système serveur de loterie,
   ∘ recevoir un ticket de loterie virtuel généré par le serveur en réponse à la transmission, le ticket de loterie virtuel comprenant un identifiant unique permettant d'identifier le pari effectué,
- une imprimante, et
- une unité de traitement configurée pour commander l'impression par l'imprimante d'une facturette identifiant le pari effectué, à partir des données de pari et/ou du ticket de loterie virtuel.

Selon un sixième aspect, il est en outre proposé un système serveur de loterie comprenant :
- une première interface de communication pour recevoir des données de pari émises par un terminal mobile comprenant un élément sécurisé,
- au moins une unité de traitement configuré pour générer un ticket de loterie virtuel en réponse à la réception des données de pari, le ticket de loterie virtuel comprenant un identifiant unique permettant d'identifier le pari effectué,
- une deuxième interface de communication pour envoyer le ticket de loterie virtuel généré au terminal mobile en vue de sa mémorisation par l'élément sécurisé.

Ce système serveur peut comprendre en outre un serveur de gestion de relation client.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 représente de façon schématique un terminal mobile selon un mode de réalisation de l'invention.
La figure 2 représente de façon schématique un terminal de relai selon un mode de réalisation de l'invention.
La figure 3 représente de façon schématique les dispositifs représentés sur les figures 1 et 2 et un système serveur de loterie, selon un mode de réalisation de l'invention.
Les figures 4 à 6 sont des organigrammes d'étapes d'un procédé de mise en oeuvre d'une loterie virtuelle par les dispositifs représentés sur les figures 1 à 3, selon un mode de réalisation de l'invention.

Sur l'ensemble des figures, les éléments similaires portent des références identiques.

### DESCRIPTION DETAILLEE DE L'INVENTION

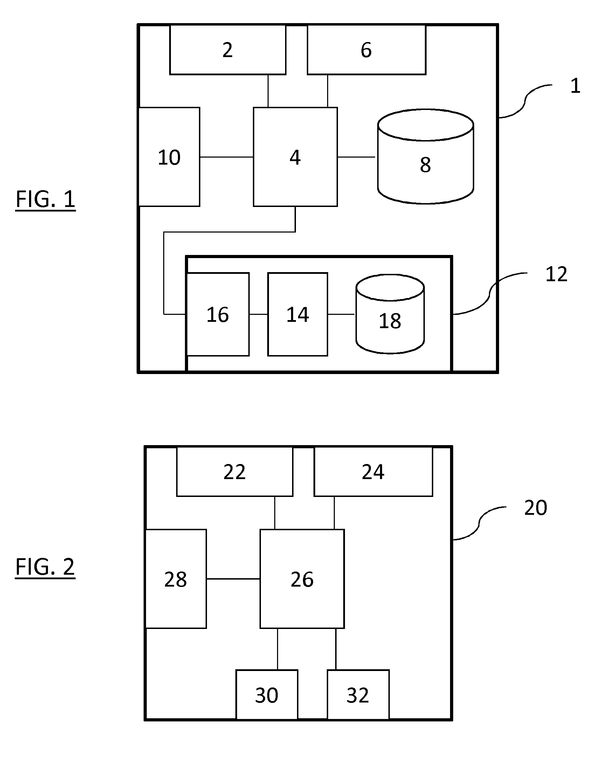

En référence à la **figure 1****,** un terminal mobile 1 comprend une interface de saisie 2, une unité de traitement de données 4, un écran d'affichage 6, une mémoire 8, une interface de communication réseau 10, et un élément sécurisé 12.

L'interface de saisie 2 comprend par exemple un clavier et/ou un écran tactile et/ou une souris. Cette interface de saisie peut également comprendre un capteur biométrique, par exemple adapté pour reconnaître une empreinte digitale.

L'unité de traitement de données 4 est apte à recevoir des données saisies par l'interface de saisie 2. L'unité de traitement de données 4 comprend par exemple un ou plusieurs processeurs.

L'unité de traitement de données 4 est connectée à l'écran d'affichage 6 de sorte à afficher des données graphiques sur cet écran 6. L'unité de traitement de données 4 est également connectée à la mémoire 8, et apte à écrire des données dans ladite mémoire 8 ou lire des données préalablement écrites dans la mémoire 8.

La mémoire 8 comprend par exemple un ou plusieurs disques durs, et/ou un ou plusieurs disques de type SSD et/ou un ou plusieurs mémoires de type EEPROM et/ou un ou plusieurs mémoires de type flash. Cette mémoire 8 peut comprendre au moins un disque logé à demeure dans le terminal mobile 1 et/ou comprendre au moins une clé amovible par exemple munie d'un connecteur USB.

Le terminal mobile 1 comprend en outre un système d'exploitation mémorisé par la mémoire 8 et exécutable par l'unité de traitement 4. Ce système d'exploitation peut coopérer avec des programmes applicatifs, généralement appelés « applications », installables dans le terminal mobile indépendamment du système d'exploitation.

L'interface de communication réseau 10 est adaptée pour communiquer avec un autre dispositif à proximité par un canal sans ou avec fil. L'interface de communication réseau 10 comprend par exemple une puce NFC (« Near Field Communication » en anglais) pour établir un canal de communication en champ proche avec un autre dispositif. On prendra dans la suite ce mode de communication comme exemple nullement limitatif pour la mise en oeuvre de l'invention. L'interface de communication 10 peut alternativement être adaptée pour mettre en oeuvre d'autres protocoles de communication sans fil (Wi-Fi, Bluetooth).

De façon connue en soi, l'élément sécurisé 12 (« Secure Element » d'après la terminologie anglo-saxonne, abrégé en SE), est une plate-forme matérielle inviolable, capable d'accueillir en toute sécurité des applications et stocker des données confidentielles et cryptographiques.

L'élément sécurisé 12 se présente typiquement sous la forme d'une carte électronique amovible, laquelle est insérée dans un logement du terminal mobile 1.L'élément sécurisé 12 est par exemple une carte électronique au format UICC ou SIM. L'élément sécurisé est alternativement une carte mémoire amovible, par exemple au format MicroSD.

L'élément sécurisé peut alternativement se présenter comme un composant du terminal mobile, conventionnellement appelé « Embedded Secure Element » en anglais, ou bien être un élément logique du terminal adapté pour sécuriser l'exécution est le stockage d'applications et de données du terminal, conventionnellement appelé « environnement d'exécution de confiance (« Trusted Execution Environnement » en anglais).

Quelle que soit sa forme, l'élément sécurisé 12 peut être protégé par une clef de cryptage affectée en propre à un possesseur de l'élément sécurisé. Ainsi, lorsque l'élément sécurisé est une carte d'identification d'abonné à un réseau mobile, cette clef de cryptage peut être un code PIN.

L'élément sécurisé 12 comprend une interface de communication 16 adaptée pour communiquer avec l'unité de traitement de données 4 du terminal mobile 1, une unité de traitement interne 14 et une mémoire interne 18. L'unité de traitement de données interne 14 est connectée à la fois à l'interface de communication 16 et la mémoire 18 de l'élément sécurisé 12.

Le terminal mobile 1 peut se présente sous différentes formes : ordinateur portable, téléphone portable de type smartphone, tablette, etc.

En référence à la **figure 2****,** un terminal de relai 20 comprend une première interface de communication 22, une deuxième interface de communication 24, une unité de traitement de données 26, et une imprimante 28.

La première interface de communication 22 est adaptées pour communiquer avec l'interface de communication 18 terminal mobile 1.

La deuxième interface de communication 24 est quant à elle adaptée pour communiquer avec un système de loterie 34 qui sera décrit plus loin.

Les deux interfaces de communications 22, 24 peuvent être de même type. Toutefois, dans ce qui suit, on prendra l'exemple non limitatif d'interfaces de communication 10 et 22 du type en champ proche (NFS), et d'une interface de communication 24 de type Wifi ou filaire pour communiquer avec le système serveur de loterie 34 par Internet.

Le terminal de relai comprend également un écran d'affichage 30.

Le terminal de relai comprend également un distributeur 32 d'argent liquide. Ce distributeur 32 comprend de façon conventionnelle un orifice de fourniture d'argent liquide à une personne, et un mécanisme de distribution d'argent liquide depuis une caisse adaptée pour stocker de l'argent liquide sous forme de billets de banque et/ou de pièces de monnaie.

L'unité de traitement 26 est adaptée pour commander le distributeur d'argent liquide.

Le terminal de relai peut également comprendre des moyens de paiement (non illustrés). Cette interface de paiement peut comprendre un orifice d'insertion pour carte bancaire, et/ou au moins un orifice d'entrée pour argent liquide, et un mécanisme adapté pour conduire de l'argent liquide inséré par cet orifice d'entrée dans la caisse de stockage.

Le terminal de relai 20 se présente par exemple sous la forme d'une borne de jeu installé de façon permanente dans un lieu de participation à une loterie, tel qu'un bar PMU.

Au contraire du terminal mobile 1, lequel peut être personnel, le terminal de relai a vocation à pouvoir être utilisé par plusieurs joueurs.

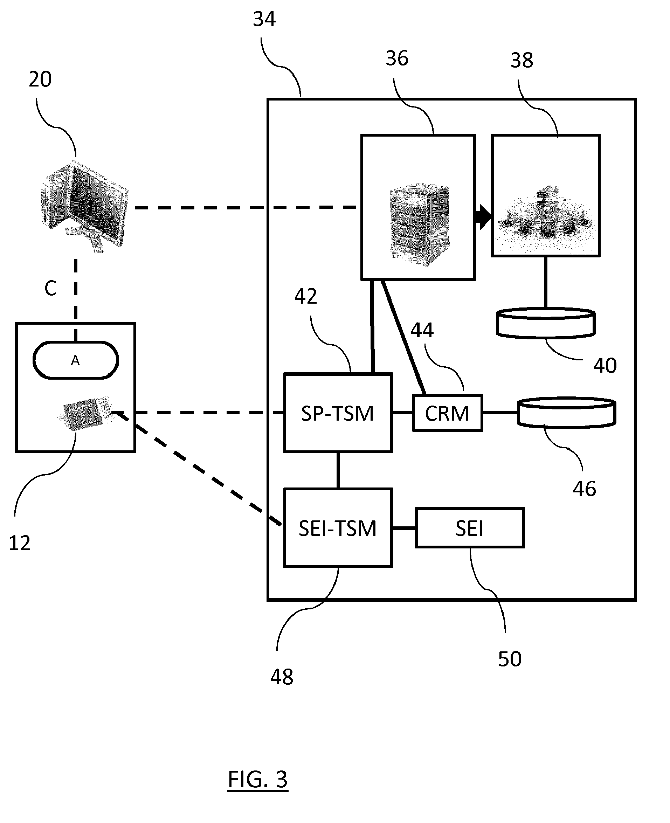

En référence à la **figure 3****,** le terminal de relai 20 a notamment pour fonction de servir de relai entre le terminal mobile 1 et un système serveur de loterie à distance 34.

Le système serveur de loterie 34 comprend :
- un serveur central de gestion de loterie 36,
- un serveur de stockage et de traitement de paris 38,
- un serveur de stockage de transactions 44 et de traitement des données avec des fonctionnalités destinées à analyser les habitudes de jeux des joueurs et de mettre en place des campagnes de marketing (« Customer Relationship Manager », abrégé conventionnellement en CRM),
- deux serveurs de confiance (appelé « Trusted Service Manager » en anglais, et abrégé en TSM), dont :
   ∘ un serveur 42 fournisseur de services (« Service Provider », ici abrégé en SP-TSM),
   ∘ un serveur 48 de gestion d'élément sécurisé (« Secure Element Issuer » en anglais, ici abrégé en SEI-TSM).

Le serveur de gestion de loterie 36 comprend une interface de communication externe apte à communiquer avec le terminal de relai 2 et/ou directement le terminal mobile 1.

Le serveur de gestion de loterie 36 comprend également une interface de communication interne pour communiquer avec le serveur de stockage 38 et avec le serveur fournisseur de services 42.

Le serveur de gestion de loterie 36 comprend également des moyens pour héberger un site web accessible par le terminal mobile 1 et/ou le terminal de relai 20.

Le serveur de stockage 38 comprend une mémoire 40 prévue pour mémoriser une base de données de pari.

Le serveur fournisseur de services 42 et 48 comprennent des moyens pour établir un canal de communication sécurisé avec l'unité de traitement interne de l'élément sécurisé logé dans le terminal 1. On comprend que ce canal sollicite les interfaces de communications 16 et 10 ou directement par 12 via canal OTA par exemple. Ce canal de communication sécurisé peut également solliciter le terminal de relai 20 et/ou le serveur de gestion de loterie 36. En variante, le serveur fournisseur de service communique directement avec le terminal mobile 1.

Une fonction du serveur fournisseur de service est de communiquer au terminal relai des résultats de loterie.

Le serveur 44 assure une fonction d'analyse des transactions. Cette fonction permet d'analyser les habitudes des utilisateurs et de leurs delivrer des messages publicitaires. Ainsi il assure une fonction dite de CRM (CRM signifiant « Customer relationship management »). Le serveur 44 peut également être appelé serveur GRC pour « Gestion de la relation client ») et» est adapté pour communiquer avec le serveur 36, et comprend une mémoire 46.

Le serveur 48 de gestion d'élément sécurisé est connecté au serveur fournisseur de services 42.

### Procédé de mise en oeuvre d'une loterie

Il va maintenant être décrit un procédé de mise en oeuvre d'une loterie par le terminal mobile 1, le terminal de relai 20 et le système de loterie 34. Ce procédé ne nécessite pas d'émission d'un ticket de loterie physique pour chaque parie effectué.

Pour décrire ce procédé, on prendra l'exemple d'un élément sécurisé formé par une carte SIM associé à un numéro d'abonné à un réseau mobile, et d'un terminal mobile 1 de type smartphone apte à communiquer via ce réseau mobile.

Le procédé comprend une phase d'enrôlement (A), une phase de prise de pari (B), et une phase de résultat (C) dont des modes de réalisation vont être successivement détaillés.

### A) Phase d'enrôlement

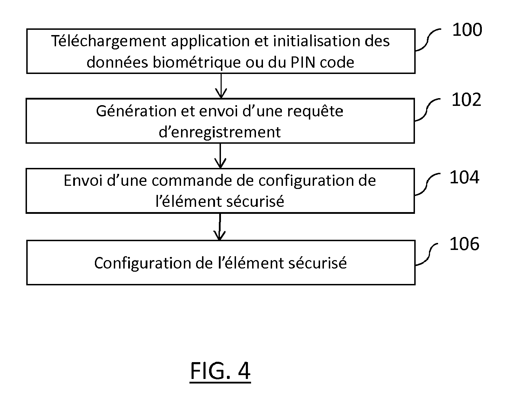

En référence à la **figure 4**, dans une étape 100, un programme applicatif A, nommée dans la suite « application de jeu » est téléchargée dans la mémoire 8 du terminal mobile 1 depuis un serveur d'applications. Ce serveur d'application peut par exemple faire partie du système serveur de loterie ou non (ex : un serveur marchant tel que Google Store...).

L'application de jeu est adaptée pour coopérer avec le système d'exploitation exécuté par l'unité de traitement 4 du terminal mobile.

L'application de jeu peut en outre être configurée pour interagir avec des pages du site web exécuté par le serveur central de loterie 36.

Dans une étape 102, l'application de jeu A génère ensuite une requête d'enregistrement de l'utilisateur du terminal mobile en tant que joueur potentiel à une future loterie organisée par le système de loterie, et envoie cette requête au système serveur de loterie 34.

La requête d'enregistrement comprend des données permettant d'identifier un utilisateur du terminal mobile : par exemple le numéro de téléphone d'abonné de cet utilisateur, et un identifiant de son opérateur de réseau mobile.

Ces données peuvent par exemple être saisies par l'utilisateur après affichage sur l'écran 6 du terminal 1 d'un message invitant l'utilisateur du terminal 1 à cette saisie.

L'application A commande l'envoi de la requête d'enregistrement au système de loterie, et plus précisément au serveur SP-TSM 42. Lorsque le système serveur de loterie 34 reçoit la requête d'enregistrement, les étapes suivantes sont mises en oeuvre.

Le serveur SEI-TSM 42 génère une commande de configuration de l'élément sécurisé 12. Il communique cette commande de configuration au serveur SEI-TSM qui soit lui donnera des données lui permettant d'accéder à l'élément sécurisé soit assurera la connexion à l'élément sécurisé.

Les serveurs 42 et/ou 48 mettent en oeuvre une vérification de ces données (étapes « Check Eligibility », « Provisioning », « Activation » de au sens de la norme définie par la Global Platform ou AFSCM Association).

La commande de configuration est transmise 104 à l'élément sécurisé 12, par les serveurs SEI-TSM 48 et SP-TSM 42.

Cette commande de configuration est réceptionnée par l'application de jeu A installée dans le terminal mobile 1 et déclenche une configuration 106 de l'élément sécurisé 12.

La configuration 106 de l'élément sécurisé 12 comprend notamment :
- un téléchargement depuis le système serveur d'une applet de jeu à installer dans la mémoire 18 de l'élément sécurisé 12,
- une allocation d'espace mémoire dans la mémoire interne 18, dédiée au stockage de données en relation avec une loterie organisée par le système serveur de loterie 34 ;
- une installation de l'applet téléchargée dans l'espace alloué dans la mémoire 18.

Dans le cadre du présent procédé, la configuration 106 de l'élément sécurisé est mise en oeuvre après le téléchargement complet 100 de l'application de jeu, ce qui permet d'éviter l'implémentation dans l'applet d'un mécanisme d'attente de téléchargement de l'application A.

Une fois la configuration terminée, le système serveur de loterie 34 envoie un message de confirmation de l'enregistrement du joueur. Ce message peut être transmis au terminal mobile 1 via un message dédié, par exemple un message de type SMS ou un message personnalisé. Ce message peut être chiffré.

Dans ce message de confirmation d'enregistrement, l'utilisateur est informé qu'il est à présent enregistré auprès du système serveur de loterie, que le contenu de l'élément sécurisé est configuré, et qu'il peut donc participer à une loterie organisée par le système en tant que joueur, via l'application de jeu installée dans le terminal mobile 1.

Au cours de ces échanges le serveur SP-TSM 42 et le serveur de loterie 36 informent le serveur CRM 44 de l'ajout d'un nouveau joueur. Il sera transféré des données anonymes par l'intermédiaire du numéro de téléphone par exemple.

L'ensemble des données transmises peuvent être copiées dans et mémorisées par le serveur CRM 44. Ainsi le serveur CRM 44 pourra identifier des habitudes de jeu associées à un numéro de téléphone. Par exemple : le numéro de téléphone 0606060606 joue tous les vendredi 10 Euros, et les vendredi 13 il joue 20 Euros. Ainsi la loterie va pouvoir lui envoyer un SMS le jeudi 12 pour qu'il n'oublie pas ou lui indiquer des mises en jeux plus importantes et donc des gains plus important un mardi. On comprend que cette analyse des habitudes du joueur peut être mise en oeuvre sans connaître le nom du possesseur du numéro de téléphone.

### B) Phase de prise du pari

On suppose à ce stade que le joueur a identifié une loterie à laquelle il souhaite participer, via un menu de l'application affiché sur l'écran de son terminal mobile.

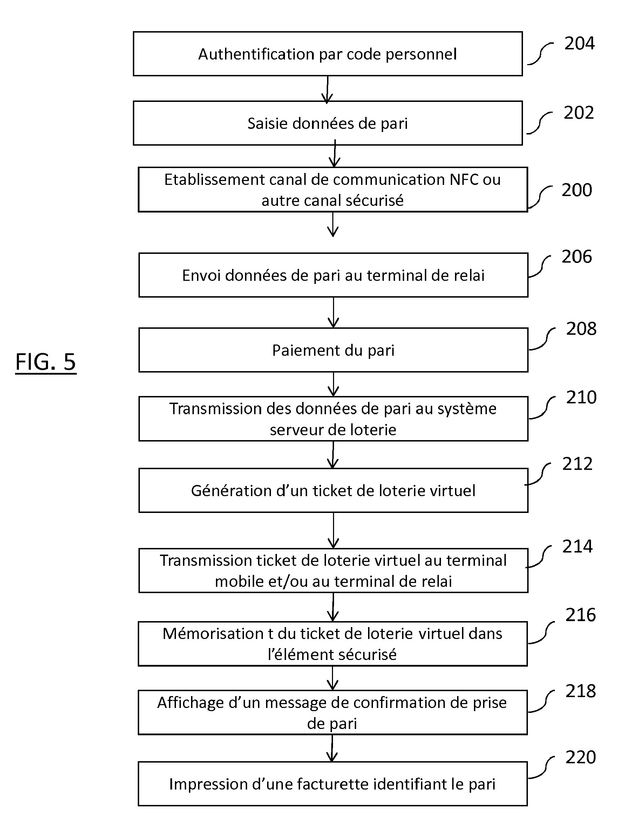

En référence à la **figure 5****,** le joueur saisit 202 des données représentatives d'un pari au moyen de l'interface de saisie du terminal mobile 1. Ces données comprennent typiquement :
- une combinaison de caractères ou symboles choisies dans un ensemble de combinaisons possibles, par exemple une série de chiffres,
- éventuellement une somme pariée, (sinon, la somme du pari est déterminée par l'application A), et/ou
- un type éventuel de pari, si la loterie autorise plusieurs types de paris.

En complément, l'application de jeu commande l'affichage d'un message invitant de joueur à saisir un code d'authentification, dans le but d'authentifier le pari. Le code d'authentification peuvent par exemple être un code PIN ou bien un code biométrique si le terminal est muni d'un capteur biométrique approprié.

L'application reçoit le code d'authentification saisi par le joueur et le compare avec un code de référence prédéterminé.

Si les deux codes sont identiques, alors l'application A autorisera l'émission 206 des données de pari vers le terminal de relai 20.

Lorsque tel joueur muni de son terminal mobile 1 se présente à proximité du terminal de relai 20, l'application de jeu A commande l'établissement 200 d'un canal de communication en champ proche C entre l'élément sécurisé 12 et le terminal de relai 20.

Une fois le canal C établi, le terminal mobile 1 transmet les données de pari saisies au terminal de relai 20. On comprend donc que des données de pari saisies avant l'établissement du canal C peuvent être mémorisées temporairement pas le terminal mobile 1 ou l'élément sécurisé 12.

L'application A commande par ailleurs l'affichage d'un message invitant le joueur à procéder à un paiement 208 du pari selon les méthodes connues de l'homme du métier. Par exemple, le paiement 208 peut être initié via les moyens de paiement intégrés du terminal de relai 20.

Après ce paiement, le terminal de relai 20 transmet 210 les données du pari au système serveur de loterie 34.

Le serveur de stockage 38 mémorise les données de pari dans la base de données 40, accompagnées éventuellement d'autres informations telles que :
- la date de la prise de pari,
- la date du tirage de la loterie pour laquelle le joueur a parié, et/ou
- des éléments d'authentification du joueur.

Le serveur de stockage 38 génère un message 212 comprenant les données du pari ainsi que le numéro de téléphone qui lui est associé. Ce message sera envoyé au serveur TSM 42 d'une part et au serveur TSM 44 d'autre part.

Le ticket de loterie virtuel généré est transmis 214 au terminal mobile 1 par le serveur SP-TSM 42. La transmission 214 du ticket de loterie au terminal mobile 1 peut être effectuée par l'intermédiaire du terminal de relai 20, ou bien sans passer par le terminal de relai 20.

Le ticket de loterie virtuel est mémorisé 216 dans l'espace alloué dans la mémoire interne 18 de l'élément sécurisé 12, cet espace étant préalablement crée durant la phase d'enrôlement.

Le joueur possesseur du terminal mobile 1 dispose à ce stade d'un bon virtuel au porteur, faisant preuve de sa participation à la loterie selon le pari qu'il a effectué via ce même terminal mobile 1.

Pour avertir le joueur de l'existence de cette preuve, le serveur SP-TSM 42 peut envoyer un SMS ou un message dédié, au terminal mobile 1 lui rappelant son pari, et en l'annonçant officiellement valide.

Le ticket de loterie peut également être transmis au terminal de relai 20. Dans ce cas, l'unité de traitement 26 du terminal de relai 20 peut commander l'impression, via l'imprimante 28, d'une facturette pouvant éventuellement faire office de preuve supplémentaire de participation à la loterie, en sus de la mémorisation 216 du ticket de loterie virtuel dans l'élément sécurisé 12.

Par ailleurs, le ticket de loterie virtuel généré est mémorisé dans la mémoire de transactions 42. Le ticket de loterie virtuel pourra ainsi ultérieurement être récupéré dans la suite par le joueur en cas de vol ou perte de son terminal mobile 1 ou de son élément sécurisé 12, au moyen d'une requête de chargement appropriée lancée depuis son (nouveau) terminal mobile.

Les mêmes étapes de la phase de prise de pari B) sont mises en oeuvre par plusieurs joueurs, avec des terminaux mobiles différents.

Chaque pari effectué et les numéros de transaction uniques sont mémorisés dans la base de données 40 et/ou dans la mémoire 46.

Les numéros de transaction pour les différents paris pour une même loterie sont tous différents de façon à identifier de façon certaine un pari.

### C) Phase de résultat

On suppose qu'un tirage a été effectué, tirage qui se traduit dans le système serveur de loterie 34 par une association, dans la base de données 40, de chaque pari mémorisé avec une valeur de gain correspondante positive ou nulle.

On suppose également que le joueur possesseur du terminal 1 se trouve après le tirage à proximité d'un terminal de relai 20 (le même que celui utilisé pour la prise de pari, ou un autre terminal de relai également connecté au système serveur de loterie 34) et qu'un canal de communication C a été établi entre le terminal mobile 1 et ce terminal de relai (étape 200).

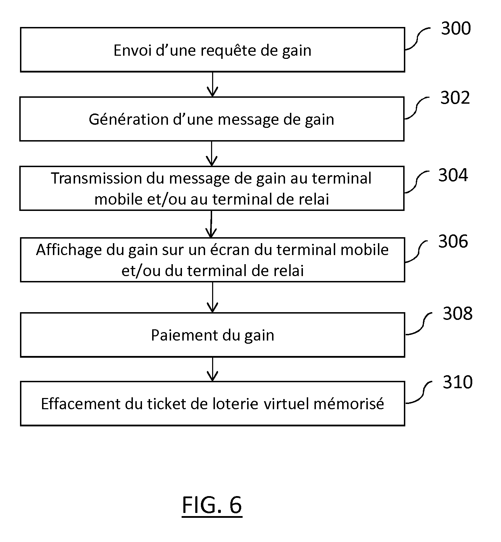

En référence à la **figure 6****,** dans une étape 300, l'application A commande l'envoi d'une requête de gain pour le pari effectué vers le système serveur de loterie 34.

La requête de gain comprend par exemple le numéro unique de transaction compris dans le ticket de loterie virtuel mémorisé dans l'élément sécurisé 12.

Cet envoi 300 peut être déclenché à l'initiative du joueur, via un menu dédié généré par l'application A et affiché sur l'écran 6 du terminal mobile 1. En variante, cette requête est émise automatiquement, postérieurement à la date de tirage si celle-ci est prédéterminée par l'application A.

L'envoi 300 de la requête de gain peut également conditionné au résultat positif d'une authentification telle que l'authentification 204 décrite dans le cadre de la phase de prise de pari B).

La requête de gain est ensuite retransmise par le terminal de relai 20 au système de loterie 34, et plus précisément au serveur de stockage 38.

Le serveur de stockage 38 recherche une valeur de gain associée au numéro transaction unique.

Cette valeur de gain est ensuite transmise 304 par le système serveur de loterie au terminal de relai 20 et/ou au terminal mobile 1.

L'envoi de la valeur de gain 304 peut également être déclenchée automatiquement par le système serveur de loterie 34, suite au tirage.

Lorsque le terminal de relai 20 reçoit la valeur de gain, l'unité de traitement 26 commande l'affichage sur l'écran d'affichage 30 de la valeur de gain reçue.

Le paiement d'une somme correspondant à la valeur de gain est ensuite effectué au bénéfice du joueur, si cette valeur de gain est supérieure à zéro.

Par exemple, il peut être prévu que le paiement soit effectué en liquide, au moyen de l'argent liquide préalablement stocké dans la caisse du distributeur 32 intégré au terminal de relai 20

Alternativement, le paiement est mis en oeuvre par virement, par sollicitation de sites bancaires, selon une méthode connue.

L'application A commande ensuite l'effacement 310 du ticket de loterie virtuel dans la mémoire 18 de l'élément sécurisé 12.

Cet effacement 310 peut être déclenché immédiatement lors de la réception par l'application d'une valeur de gain qui s'avère être nulle.

Cet effacement 310 peut être déclenché également lors de la réception d'un message indiquant qu'un paiement d'une valeur de gain associée à l'identifiant unique au profit d'un bénéficiaire identifié par les données de pari a été effectué. Ce message peut être émis par le terminal de relai 20 lorsque ce dernier paie, via son distributeur intégré, le possesseur du terminal mobile 1. Néanmoins, l'effacement sera de préférence toujours piloté depuis l'application 42 qui maintient à jour le contenu de la mémoire de l'élément sécurisé.

Le procédé de mise en oeuvre d'une loterie virtuelle qui est ici proposé offre de nombreux avantages :
- supprimer le ticket papier « au porteur » (la preuve du pari est électronique)
- réaliser des gains économiques certains par la suppression du papier,
- authentifier le joueur quand il va chercher son gain. Ainsi, même si son téléphone portable est volé, le voleur ne pourra pas chercher les gains.
- en cas de perte ou vol du mobile, le joueur pourra de faire envoyer à nouveau sa preuve de pari, mémorisée par le système serveur de loterie.
- le joueur est authentifié mais reste anonyme.

## Revendications

1. Procédé de participation à une loterie comprenant les étapes suivantes mises en oeuvre par un terminal mobile (1) comprenant une interface de saisie (2) et un élément sécurisé (12):
• acquisition (202) via l'interface de saisie de données de pari,
• envoi (206) des données de pari acquises vers le système serveur de loterie (34),
• réception (214) d'un ticket de loterie virtuel généré par le système serveur de loterie en réponse à l'envoi des données de pari, le ticket de loterie virtuel comprenant un identifiant unique du pari effectué,
• mémorisation (216) du ticket de loterie virtuel dans une mémoire de l'élément sécurisé (12).

2. Procédé selon la revendication précédente, comprenant l'établissement (200) d'un canal de communication (C) en champ proche avec un terminal de relai (20), les données de pari étant émises dans le canal (C) établi en vue de leur retransmission par le terminal de relai (20) vers le système serveur de loterie (34).

3. Procédé selon l'une des revendications précédentes, comprenant en outre une comparaison entre un code saisi via l'interface de saisie et un code de référence mémorisé par l'élément sécurisé et propre à l'utilisateur du terminal mobile, les données de pari étant émises ou non vers le système serveur de loterie en fonction du résultat de la comparaison.

4. Procédé selon l'une des revendications précédentes, comprenant en outre des étapes de :
• réception (304) d'une valeur de gain émise par le système serveur de loterie et associée à l'identifiant unique,
• affichage (306) de la valeur de gain reçue sur un écran du terminal mobile.

5. Procédé selon la revendication précédente, comprenant l'envoi (300) vers le système serveur de loterie d'une requête de gain comprenant l'identifiant unique mémorisé par l'élément sécurisé (12), la réception de la valeur de gain faisant réponse à l'envoi (300) de requête de gain.

6. Procédé selon l'une des revendications précédentes, comprenant en outre un effacement (310) du ticket de loterie virtuel mémorisé dans l'élément sécurisé (12) en réponse à :
• la réception d'un gain de valeur nulle associée à l'identifiant unique, et/ou
• la réception d'un message indiquant qu'un paiement d'une valeur de gain associée à l'identifiant unique au profit d'un bénéficiaire identifié par les données de pari a été effectué.

7. Procédé selon l'une des revendications précédentes, comprenant en outre les étapes suivantes :
• envoi (102) à un système serveur de loterie (34) d'un numéro d'abonné propre à une carte d'identification d'abonné à un réseau mobile (SIM) du terminal mobile,
• réception (104) d'une commande de configuration de l'élément sécurisé ayant pour destinataire le numéro d'abonné,
• allocation (106), dans l'élément sécurisé, d'un espace mémoire à partir de la commande de configuration reçue, le ticket de loterie virtuel étant mémorisé dans l'espace mémoire alloué.

8. Procédé de participation à une loterie **caractérisé en ce qu'**il comprend les étapes suivantes mises en oeuvre par un terminal de relai (20):
• réception de données de pari émises par un terminal mobile (1),
• transmission (210) des données reçues à un système serveur de loterie (34),
• réception (214) d'un ticket de loterie virtuel généré par le système serveur de loterie en réponse à la transmission (210), le ticket de loterie virtuel comprenant un identifiant unique permettant d'identifier le pari effectué,
• impression (220) à partir des données de pari et/ou du ticket de loterie virtuel d'une facturette identifiant le pari effectué.

9. Procédé selon la revendication 8, comprenant en outre des étapes de :
• réception de l'identifiant unique émis par le terminal mobile,
• émission (300) vers le serveur de loterie d'une requête de gain comprenant l'identifiant unique,
• réception (304) d'une valeur de gain associée à l'identifiant unique en réponse à la requête de gain,
• mise en oeuvre d'au moins une des étapes suivantes :
o affichage (306) de la valeur de gain sur un écran du terminal de relai,
∘ transmission de la valeur de gain au terminal mobile,
∘ distribution (308) d'une somme d'argent liquide correspondant à la valeur de gain stockée dans un distributeur du terminal de relai (20).

10. Procédé d'organisation d'une loterie virtuelle, comprenant les étapes suivantes mises en oeuvre par un système serveur de loterie (34):
• réception (210) de données de pari émises par un terminal mobile comprenant un élément sécurisé,
• génération (212) d'un ticket de loterie virtuel en réponse à la réception le ticket de loterie comprenant un identifiant unique permettant d'identifier le pari effectué,
• envoi (214) du ticket de loterie virtuel généré au terminal mobile en vue de sa mémorisation par l'élément sécurisé.

11. Terminal mobile (1) comprenant :
• une interface de saisie (2) de données de pari,
• une interface de communication (10) pour communiquer avec un système serveur de loterie (34),
• un élément sécurisé (12) comprenant une mémoire,
le terminal étant **caractérisé par** :
• au moins une unité de traitement (4,14) configurée pour commander :
∘ l'envoi des données de pari saisies vers le système serveur de loterie,
∘ la mémorisation dans la mémoire de l'élément sécurisé d'un ticket de loterie virtuel généré par le serveur en réponse à l'envoi, reçu par l'interface de communication, le ticket de loterie virtuel comprenant un identifiant unique permettant d'identifier le pari effectué.

12. Terminal mobile selon la revendication 11, dans lequel l'élément sécurisé comprend :
• la carte d'identification d'abonné à un réseau mobile, ou
• un environnement d'exécution de confiance du terminal mobile, ou
• une carte mémoire amovible par rapport au terminal mobile.

13. Terminal de relai (20) comprenant :
• une interface de communication (22) adaptée pour :
∘ recevoir des données de pari émises par un terminal mobile,
∘ transmettre les données de pari à un système serveur de loterie,
∘ recevoir un ticket de loterie virtuel généré par le serveur en réponse à la transmission, le ticket de loterie virtuel comprenant un identifiant unique permettant d'identifier le pari effectué,
• une imprimante (28), et
• une unité de traitement (26) configurée pour commander l'impression par l'imprimante d'une facturette identifiant le pari effectué, à partir des données de pari et/ou du ticket de loterie virtuel.

14. Système serveur de loterie (34) comprenant :
• une première interface de communication (36) pour recevoir des données de pari émises par un terminal mobile comprenant un élément sécurisé,
• au moins une unité de traitement (38) configuré pour générer un ticket de loterie virtuel en réponse à la réception des données de pari, le ticket de loterie virtuel comprenant un identifiant unique permettant d'identifier le pari effectué,
• une deuxième interface de communication (42) pour envoyer le ticket de loterie virtuel généré au terminal mobile en vue de sa mémorisation par l'élément sécurisé.

15. Système serveur de loterie (34) selon la revendication précédente, comprenant en outre un serveur de gestion de relation client (CRM).
